(19) Europäisches Patentamt
European Patent Office
Office européen des brevets

(11) **EP 4 435 719 A1**

(12) **EUROPEAN PATENT APPLICATION**
published in accordance with Art. 153(4) EPC

(43) Date of publication:
**25.09.2024   Bulletin 2024/39**

(21) Application number: **22895556.3**

(22) Date of filing: **11.11.2022**

(51) International Patent Classification (IPC):
***G06T 7/20*** (2017.01)

(52) Cooperative Patent Classification (CPC):
**G06T 7/20**

(86) International application number:
**PCT/JP2022/042142**

(87) International publication number:
**WO 2023/090274 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021   JP 2021188165**

(71) Applicant: **OMRON Corporation
Kyoto 600-8530 (JP)**

(72) Inventors:
• **MIYAZAKI, Masashi**
**Kyoto-shi, Kyoto 600-8530 (JP)**
• **NISHIYUKI, Kenta**
**Kyoto-shi, Kyoto 600-8530 (JP)**
• **WADA, Hirotaka**
**Kyoto-shi, Kyoto 600-8530 (JP)**
• **KINOSHITA, Koichi**
**Kyoto-shi, Kyoto 600-8530 (JP)**

(74) Representative: **SONN Patentanwälte GmbH & Co KG
Riemergasse 14
1010 Wien (AT)**

(54) **WORK RECOGNITION DEVICE, WORK RECOGNITION METHOD, AND WORK RECOGNITION PROGRAM**

(57) A work recognition device acquires a photographed image capturing work of a worker; detects, based on the photographed image, first detection information relating to an object of the work and at least one of a right hand or a left hand of the worker; detects, based on the photographed image, second detection information relating to a skeleton of the worker; executes first recognition processing that recognizes the work, based on the first detection information and the second detection information which have been detected; executes second recognition processing that recognizes the work, based on the second detection information that has been detected; determines, based on the first detection information, whether or not a switching condition for switching between recognizing the work by the first recognition processing or recognizing the work by second recognition processing is satisfied; and in a case in which the switching condition is not satisfied, outputs a recognition result of the work by the first recognition section, and in a case in which the switching condition is satisfied, outputs a recognition result of the work by a second recognition section.

FIG.1

## Description

Technical Field

The technology of the present disclosure relates to a work recognition device, a work recognition method, and a work recognition program.

Background Art

Japanese Patent Application Laid-Open (JP-A) No. 2019-12328 discloses: a person action estimation system that determines an action carried out by a person using a tool, the system including: an image acquisition section that acquires an image capturing the action; a person action determination section that, based on the image from the image acquisition section and from predetermined person action definitions, outputs a person action candidate with respect to the action captured in the image; a tool data acquisition section that acquires sensor information from a sensor attached to the tool; a tool operation determination section that, based on the sensor information from the tool data acquisition section and from predetermined tool operation definitions, outputs a tool operation candidate with respect to the tool acquired by the sensor information; and an overall person action determination section that, based on the person action candidate output by the person action determination section and the tool operation candidate output by the tool operation determination section, estimates the action captured in the image from the image acquisition section.

Japanese Patent No. 6444573 discloses a work recognition device, the work recognition device including: a sensor data acquisition section that acquires sensor data; a body part information acquisition section that detects a part of a body of a worker based on the sensor data acquired by the sensor data acquisition section and acquires body part information relating to the part of the body of the worker; an object information acquisition section that detects an object based on the sensor data acquired by the sensor data acquisition section and acquires object information relating to the object; an association section that associates the object and the part of the body of the worker, which carried out work using the object, based on the body part information acquired by the body part information acquisition section and the object information acquired by the object information acquisition section; and a recognition result analysis section that recognizes work implemented by the worker, based on association information relating to an association result that is associated at the association section.

SUMMARY

Problem to be Solved by the Invention

In the technology described in Japanese Patent Application Laid-Open (JP-A) No. 2019-12328, since blind spots often occur in images and there are many cases in which it is difficult to accurately estimate the action of a person, the action recognition of a person by image analysis comprehensively recognizes work using not only action definitions by position information of a person but also predetermined person action information and operation information by a tool.

In addition, the technology described in Japanese Patent No. 6444573 uses the coordinates of the parts of the body of the worker and the position coordinates of the object from sensor data to recognize the work of the worker, and recognizes the type of work by associating parts of the body and parts of the object. In a case in which an object cannot be detected, processing such as complementation is performed to combine operations and the object as much as possible.

However, at an actual work site, there are many parts, and even if a part is detected, the part may be erroneously detected, making it difficult to improve work recognition accuracy.

The technology of the present disclosure has been made in view of the above points, and aims to provide a work recognition device, a work recognition method, and a work recognition program which can improve recognition accuracy of work.

Means for Solving the Problem

A first aspect of the present disclosure is a work recognition device, the work recognition device including: an acquisition section that acquires a photographed image capturing work of a worker; a first detection section that detects, based on the photographed image, first detection information relating to at least one of an object of the work or a hand of the worker, the hand being at least one of a right hand or a left hand of the worker; a second detection section that detects, based on the photographed image, second detection information relating to a skeleton of the worker; a first recognition section that executes first recognition processing that recognizes the work, based on the first detection information and the second detection information which have been detected; a second recognition section that executes second recognition processing that recognizes the work, based on the second detection information that has been detected; a determination section that determines, based on the first detection information, whether or not a switching condition for switching between recognizing the work by the first recognition section or recognizing the work by the second recognition section is satisfied; and an output section that, in a case in which the switching condition is not satisfied, outputs a recognition result of the work by the first recognition section, and in a case in which the switching condition is satisfied, outputs a recognition result of the work by the second recognition section.

In the above-described first aspect, the determination section may be configured to determine that the switching condition is satisfied in a case in which a distance between the hand and the object is greater than or equal to a predetermined threshold value.

In the above-described first aspect, the determination section may be configured to determine that the switching condition is satisfied in a case in which a distance between the right hand and the left hand is greater than or equal to a predetermined threshold value.

In the above-described first aspect, the determination section may be configured to determine that the switching condition is satisfied in a case in which a bounding box of the hand and a bounding box of the object do not overlap.

In the above-described first aspect, the determination section may be configured to determine whether or not the switching condition is satisfied based on a size of the object that has been detected.

In the above-described first aspect, the determination section may be configured to determine that the switching condition is satisfied in a case in which a size of a bounding box of the object that has been detected is smaller than a predetermined minimum size of the object.

In the above-described first aspect, the determination section may be configured to determine that the switching condition is satisfied in a case in which a size of a bounding box of the object that has been detected is larger than a predetermined maximum size of the object.

In the above-described first aspect, the first detection section may be configured to calculate a degree of reliability of the object that has been detected; and the determination section may be configured to determine that the switching condition is satisfied in a case in which the degree of reliability of the object is less than or equal to a predetermined threshold value.

In the above-described first aspect, the determination section may be configured to determine that the switching condition is satisfied in a case in which a speed of at least one of the hand or the object, which have been detected, is greater than or equal to a predetermined threshold value.

In the above-described first aspect, the determination section may be configured to determine that the switching condition is satisfied in a case in which a position of the hand that has been detected is outside a range of a predetermined work space.

A second aspect of the present disclosure is a work recognition method in which a computer executes processing, the processing including: acquiring a photographed image capturing work of a worker; detecting, based on the photographed image, first detection information relating to at least one of an object of the work or a hand of the worker, the hand being at least one of a right hand or a left hand of the worker; detecting, based on the photographed image, second detection information relating to a skeleton of the worker; executing first recognition processing that recognizes the work, based on the first detection information and the second detection information which have been detected; executing second recognition processing that recognizes the work, based on the second detection information that has been detected; determining, based on the first detection information, whether or not a switching condition for switching between recognizing the work by the first recognition processing or recognizing the work by the second recognition processing is satisfied; and in a case in which the switching condition is not satisfied, outputting a recognition result of the work by the first recognition processing, and in a case in which the switching condition is satisfied, outputting a recognition result of the work by the second recognition processing.

A third aspect of the present disclosure is a work recognition program that causes a computer to execute processing, the processing including: acquiring a photographed image capturing work of a worker; detecting, based on the photographed image, first detection information relating to at least one of an object of the work or a hand of the worker, the hand being at least one of a right hand or a left hand of the worker; detecting, based on the photographed image, second detection information relating to a skeleton of the worker; executing first recognition processing that recognizes the work, based on the first detection information and the second detection information which have been detected; executing second recognition processing that recognizes the work, based on the second detection information that has been detected; determining, based on the first detection information, whether or not a switching condition for switching between recognizing the work by the first recognition processing or recognizing the work by the second recognition processing is satisfied; and in a case in which the switching condition is not satisfied, outputting a recognition result of the work by the first recognition processing, and in a case in which the switching condition is satisfied, outputting a recognition result of the work by the second recognition processing.

Effect of the Invention

According to the technology of the present disclosure, the recognition accuracy of work can be improved.

Brief Description of the Drawings

Fig. 1 is a configuration diagram of a work recognition system.
Fig. 2 is a configuration diagram illustrating a hardware configuration of a work recognition device.
Fig. 3 is a functional block diagram of a work recognition device.
Fig. 4 is a diagram for explaining first detection information that is detected based on a photographed image that captures work.

Fig. 5 is a diagram for explaining second detection information that is detected based on a photographed image that captures work.

Fig. 6 is a diagram illustrating the recognition results of work.

Fig. 7 is a flowchart of work recognition processing.

Best Mode for Carrying Out the Invention

An example of an exemplary embodiment of the present disclosure is described below with reference to the drawings. Note that the same reference numerals are given to the same or equivalent constituent elements and parts in each drawing. Further, the dimensional ratios in the drawings may be exaggerated for convenience of explanation and may differ from the actual ratios.

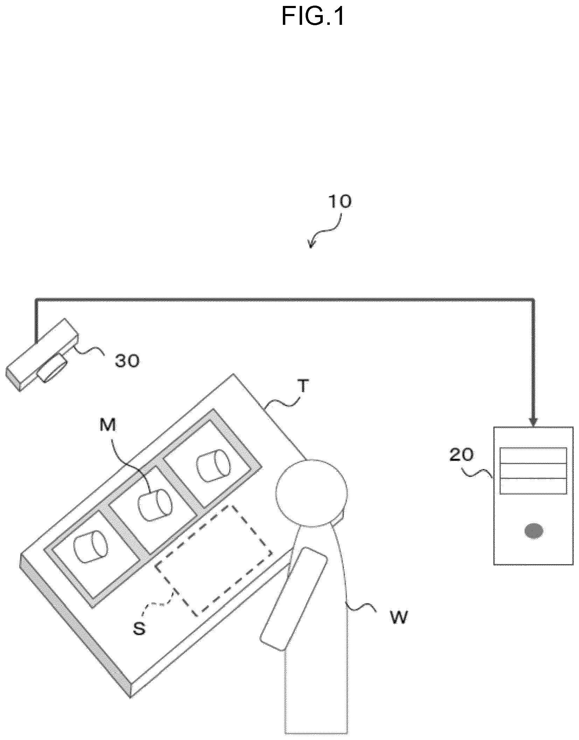

Fig. 1 illustrates the configuration of a work recognition system 10. The work recognition system 10 includes a work recognition device 20 and a camera 30.

The work recognition device 20 recognizes the content of work that is performed by a worker W, based on a photographed image that is captured by the camera 30.

As an example, the worker W takes out a work object M that is placed on a work table T and performs predetermined work on a work space S. The work table T is installed at a place that is sufficiently bright to allow the movements of a person to be recognized.

The camera 30 captures, for example, an RGB color image. Further, the camera 30 is installed at a position at which the work by the worker W can be easily recognized. Specifically, for example, the camera 30 is installed at a position that satisfies conditions such as a position at which a range that includes at least the work space S is not hidden by other objects or the like, a position at which the work of the worker W is not hidden by the work table T or the like, and a position at which the movement of fingers and the like during the work of the worker W is not hidden by other objects or the like. In the present exemplary embodiment, as an example, a case is described in which the camera 30 is installed at a position looking down at at least the upper body of the worker W from diagonally above.

Note that in the present exemplary embodiment, although a case is described in which there is one camera 30, a configuration in which plural cameras 30 are provided may be used. Further, in the present exemplary embodiment, although a case is described in which there is one worker W, there may be two or more workers W.

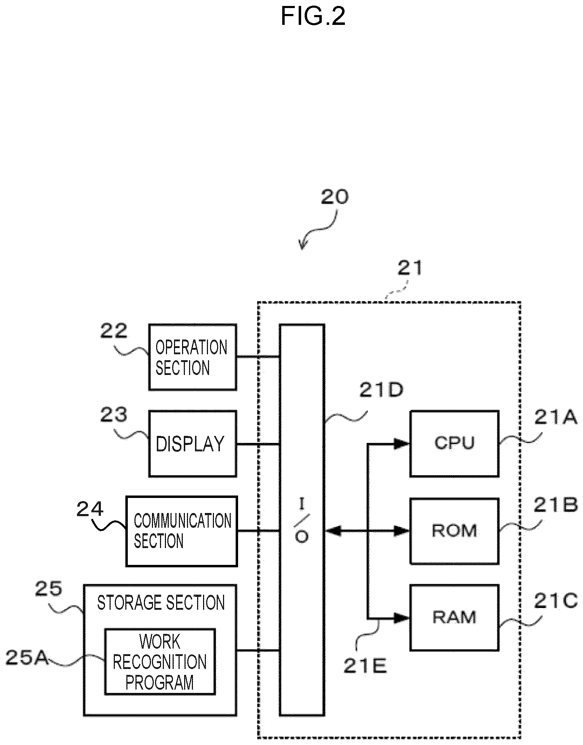

Fig. 2 is a block diagram illustrating a hardware configuration of the work recognition device 20 according to the present exemplary embodiment. As illustrated in Fig. 2, the work recognition device 20 includes a controller 21. The controller 21 is configured by a device including a general computer.

As illustrated in Fig. 2, the controller 21 includes a central processing unit (CPU) 21A, read only memory (ROM) 21B, random access memory (RAM) 21C, and an input/output interface (I/O) 21D. Each of the CPU 21A, the ROM 21B, the RAM 21C, and the I/O 21D are connected via a bus 21E. The bus 21E includes a control bus, an address bus, and a data bus.

Further, an operation section 22, a display 23, a communication section 24, and a storage section 25 are connected to the I/O 21D.

The operation section 22 includes, for example, a mouse and a keyboard.

The display 23 is configured by, for example, a liquid crystal display.

The communication section 24 is an interface for performing data communication with an external device such as the camera 30.

The storage section 25 is configured by a non-volatile external storage device such as a hard disk. As illustrated in Fig. 2, the storage section 25 stores a work recognition program 25A and the like.

The CPU 21A is an example of a computer. Here, a computer refers to a processor in a broad sense, and includes a general-purpose processor (for example, a CPU) or a dedicated processor (for example, a graphics processing unit (GPU), an Application Specific Integrated Circuit (ASIC), a Field Programmable Gate Array (FPGA), a programmable logic device, or the like).

Note that the work recognition program 25A may be realized by being stored in a non-volatile non-transitory recording medium, or distributed via a network, and appropriately installed in the work recognition device 20.

Compact disc read only memory (CD-ROMs), magneto-optical disks, hard disk drives (HDDs), digital versatile disc read only memory (DVD-ROMs), flash memory, memory cards, and the like are assumed as examples of non-volatile non-transitory recording media.

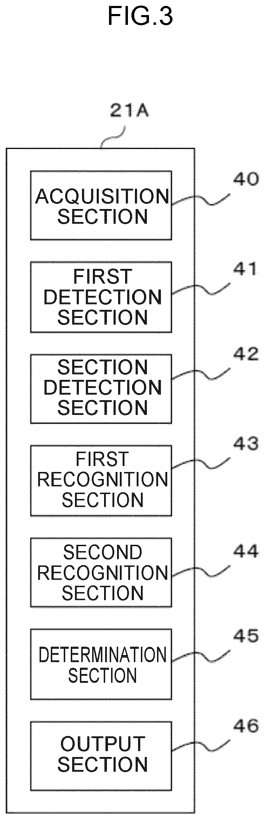

Fig. 3 is a block diagram illustrating a functional configuration of the CPU 21A of the work recognition device 20. As illustrated in Fig. 3, functionally, the CPU 21A includes an acquisition section 40, a first detection section 41, a second detection section 42, a first recognition section 43, a second recognition section 44, a determination section 45, and an output section 46. The CPU 21A functions as each functional section by reading and executing the work recognition program 25A that is stored in the storage section 25.

The acquisition section 40 acquires, from the camera 30, a photographed image of the work of the worker W which is captured by the camera 30.

The first detection section 41 detects first detection information relating to at least one of the work object M or a hand of the worker W, the hand being at least one of a right hand or a left hand of the worker M, based on the photographed image that is acquired from the camera 30. Specifically, the first detection information includes, for example, at least one of coordinates of the four corners of a bounding box that represents a range that includes at least one of the right hand or the left hand, or coordinates of the four corners of a bounding box that represents a range of the object M that is in contact with at least one of the right hand or the left hand. Here, a bounding box refers to a rectangular shape such as a rectangle or a square that circumscribes the object to be detected. Specifically, a degree of reliability of the object to be detected is calculated for each anchor box (rectangular area) of multiple types of sizes. The coordinates of the four corners of the anchor box with the highest degree of reliability are then set as the coordinates of the four corners of the bounding box. As a method of detecting such a bounding box, a known method such as Faster R-CNN (Regions with Convolutional Neural Networks) can be used, and for example, the method described in reference document 1 listed below can be used.

(Reference Document 1) "Faster R-CNN: Towards Real-Time Object Detection with Region Proposal Networks", Shaoqing Ren, Kaiming He, Ross Girshick, and Jian Sun.

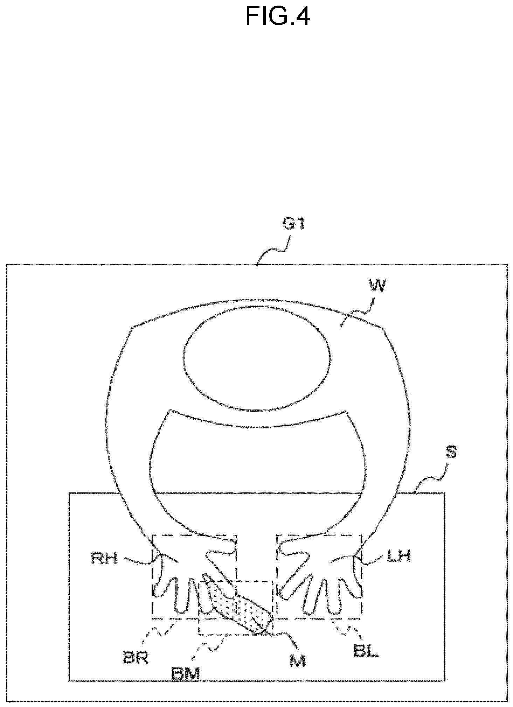

Fig. 4 illustrates a photographed image G1 captured from above the worker W, in which the worker W is handling the object M with the right hand RH in the work space S. In this case, as illustrated in Fig. 4, the first detection section 41 detects the coordinates of the four corners of the bounding box BR that surrounds the right hand RH, the coordinates of the four corners of the bounding box BL that surrounds the left hand LH, and the coordinates of the four corners of the bounding box BM that surrounds the object M. Note that, hereinafter, the right hand RH and the left hand LH are simply referred to as the hand H unless they are particularly distinguished.

As a method of detecting the first detection information based on the photographed image, a learned model for first detection can be used, the learned model for first detection being a model that has learned a learning model, in which the input is the photographed image and the output is the first detection information, and that uses a large number of photographed images as training data. As a learning method that acquires such a learned model for first detection, for example, a known method such as CNN can be used, and, for example, the method described in reference document 2 listed below can be used.

(Reference Document 2) "Understanding Human Hands in Contact at Internet Scale", pp. 9869-9878, Dandan Shan1, Jiaqi Geng, Michelle Shu, David F. Fouhey, University of Michigan, Johns Hopkins University, CVPR2020.

By detecting such first detection information in chronological order, it is possible to understand what kind of work the worker W is carrying out with respect to the object M using the hand H.

The second detection section 42 detects second detection information relating to the skeleton of the worker W based on the photographed image that is acquired from the camera 30. Specifically, the second detection information includes coordinates of feature points such as body parts and joints of the worker W, and link information in which links connecting each feature point are defined. For example, the feature points include facial parts such as the eyes and the nose of the worker W, and joints such as the neck, shoulders, elbows, wrists, hips, knees, and ankles of the worker W.

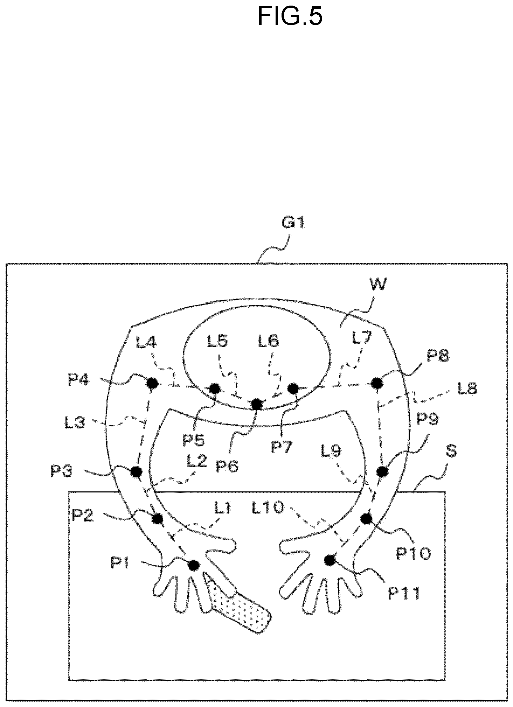

Fig. 5 illustrates an example of the second detection information that has been detected. In the example of Fig. 5, the second detection information includes the coordinates of feature points P1 to P11 detected across the right hand, the right arm, the right shoulder, the head, the left shoulder, the left arm, and the left hand of the worker W, and link information in which links L1 to L10 which connect each feature point are defined.

As a method of detecting the second detection information based on the photographed image, a learned model for second detection can be used, the learned model for second detection being a model that has learned a learning model, in which the input is the photographed image and the output is the second detection information, and that uses a large number of photographed images as training data. As a learning method that acquires such a learned model for second detection, for example, a known method such as CNN (Regions with Convolutional Neural Networks) can be used, and for example, the method described in reference document 3 listed below can be used.

(Reference Document 3) "OpenPose: Realtime Multi-Person 2D Pose Estimation using Part Affinity Fields", Zhe Cao, Student Member, IEEE, Gines Hidalgo, Student Member, IEEE, Tomas Simon, Shih-En Wei, and Yaser Sheikh, IEEE TRANSACTIONS ON PATTERN ANALYSIS AND MACHINE INTELLIGENCE.

By detecting such second detection information in chronological order, it is possible to understand what kind of work the worker W is carrying out with respect to the object M using the hand H.

The first recognition section 43 executes first recognition processing that recognizes the work, based on the first detection information detected by the first detection section 41 and the second detection information detected by the second detection section 42. Specifically, the work is recognized using a learned model for first recognition, the learned model for first recognition being a model that has learned a learning model, in which the input is the first detection information and the second detection information and the output is a recognition result of the work, and that has learned a large amount of first detection information and second detection information as training data.

The second recognition section 44 executes second recognition processing that recognizes the work, based on the second detection information detected by the second detection section 42. Specifically, the work is recognized using a learned model for second recognition, the learned model for second recognition being a model that has learned a learning model, in which the input is the second detection information and the output is a recognition result of the work, and that has learned a large amount of second detection information as training data.

Incidentally, the recognition accuracy of the recognition result of the first recognition processing that recognizes the work using both the first detection information and the second detection information is often higher compared to the recognition result of the second recognition processing that recognizes the work based only on the second detection information. However, depending on the conditions of the worker W and the object M, there are also cases in which the recognition accuracy of the first recognition processing decreases. For example, if the size of the object M is small and difficult to detect, in a case in which the object M is hidden by the hand H of the worker W and the object M cannot be accurately detected, and the entire body of the worker W is erroneously detected as the hand H, this is a case in which an object other than the object M is erroneously detected as the object M. If the hand H of the worker W or the object M is erroneously detected in this manner, the recognition accuracy of the first recognition processing decreases.

Specifically, for example, assume that the work to be performed by the worker W is to put a product and an instruction manual into a packaging box, pack it, and affix a label to the box. In this case, the objects M are a box, a product, an instruction manual, and a label. When the packing work is divided chronologically for each object M, the packing work is divided into work S1 for handling the box, work S2 for handling the product, work S3 for handling the instruction manual, and work S4 for handling the label. In a case in which such packing work is recognized by the first recognition processing and the second recognition processing, for example, the recognition accuracy of the work S1 is higher in the second recognition processing than in the first recognition processing, and conversely, there are cases in which the recognition accuracy of the work S3 is higher in the first recognition processing than in the second recognition processing.

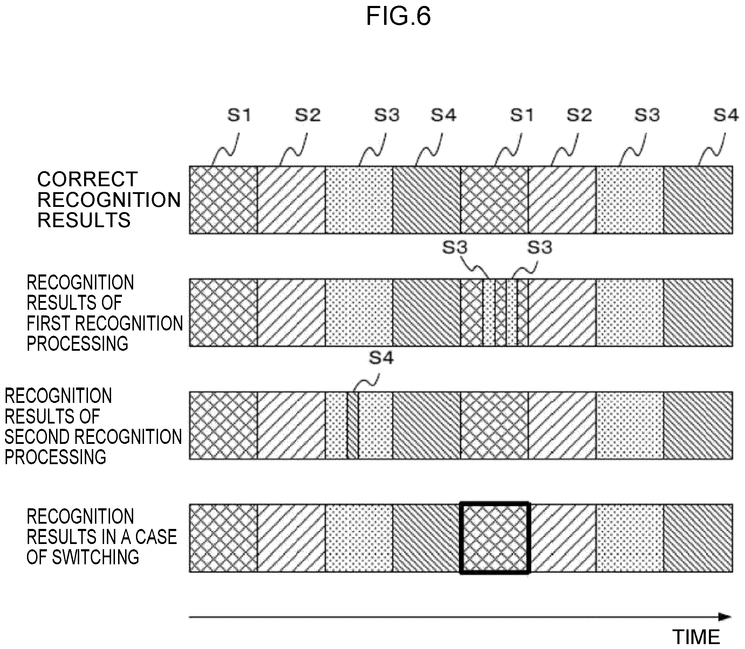

Fig. 6 illustrates an example of the recognition results of each work in a case in which the above-described packing work is performed for two cycles. As illustrated in Fig. 6, in the correct recognition results, there is no period of time in which each of work 1 to work 4 is erroneously recognized as other work. On the other hand, in the recognition results of the first recognition processing, there is a period of time in which the work S1 in the second cycle is erroneously recognized as the work S3. Further, in the recognition results of the second recognition processing, there is a period of time in which the work S3 in the first cycle is erroneously recognized as the work S4.

In this manner, there are cases in which a correct recognition result is not obtained by only the first recognition processing by the first recognition section 43 or by only the second recognition processing by the second recognition section 44.

Therefore, the determination section 45 determines whether or not a switching condition for switching between whether to recognize the work by the first recognition section 43 or whether to recognize the work by the second recognition section 44 is satisfied, based on the first detection information.

For example, the determination section 45 determines that a first switching condition is satisfied in a case in which a distance between the detected hand H and the object M is greater than or equal to a predetermined threshold value T1. Specifically, for example, in a case in which at least one of a distance between a center position of the bounding box BR of the right hand RH and a center position of the bounding box BM of the object M or a distance between a center position of the bounding box BL of the left hand LH and a center position of the bounding box BM of the object M is greater than or equal to the predetermined threshold value T 1, it is determined that the first switching condition is satisfied.

Here, if the coordinates of a center position C1 of the bounding box of the hand H are (x1, y1) and the coordinates of a center position C2 of the bounding box BM of the object Mare (x2, y2), then a distance D1 between the center position C1 and the center position C2 is calculated using the following formula.

$$\text{Formula (1): } D1 = [(x1\text{-}x2)^2 + (y1\text{-}y2)^2]^{1/2}$$

The threshold value T1 is set in advance to a value (for example, greater than or equal to 10 cm) that allows it to be determined that there is a high possibility that at least one of the detected hand H or the object M has been erroneously detected in a case in which the distance D1 is greater than or equal to the threshold value T1, based on, for example, experimental results. Note that in a case of calculating the distance D1, the position of one of the four corners of the bounding box may be used instead of the center position of the bounding box.

Further, the determination section 45 may determine that a second switching condition is satisfied in a case in which a distance D2 between the right hand RH and the left hand LH is greater than or equal to a predetermined threshold value T2. The distance D2 is the distance between the center position of the bounding box BR of the right hand RH and the center position of the bounding box BL of the left hand LH, and can be calculated in the same manner as in above Formula (1). The threshold value T2 is set in advance similarly to the threshold value T1.

Furthermore, the determination section 45 may determine that a third switching condition is satisfied in a case in which the bounding box of the hand H and the bounding box of the object M do not overlap. Specifically, for example, in a case in which at least one of the bounding box BR of the right hand RH or the left hand LH, and the bounding box BM of the object M do not overlap, it is determined that the third switching condition is satisfied. This is because the fact that the bounding boxes do not overlap means that the distance between the hand H and the object M is large, and it is considered that there is a high possibility that at least one of the hand H or the object M has been erroneously detected.

In addition, the determination section 45 may determine whether or not a fourth switching condition is satisfied based on the size of the detected object M. Specifically, in a case in which the size of the bounding box BM of the detected object M is smaller than the predetermined minimum size of the object M, the determination section 45 may determine that the fourth switching condition is satisfied. Here, the size of bounding box is, for example, the area of the bounding box. In this manner, in a case in which the size of the bounding box BR of the detected object M is smaller than the size of the object M having the minimum size among plural objects M, it is determined that the fourth switching condition is satisfied since there is a high possibility that the detected object M has been erroneously detected.

Further, in a case in which the size of the bounding box of the detected object M is larger than the predetermined maximum size of the object M (for example, 1.5 times or larger than the maximum size of the object M), the determination section 45 may determine that a fifth switching condition is satisfied. In this manner, in a case in which the size of the bounding box BR of the detected object M is larger than the size of the object M having the maximum size among plural objects M, it is determined that the fifth switching condition is satisfied since there is a high possibility that the detected object M has been erroneously detected.

Furthermore, the determination section 45 may determine that a sixth switching condition is satisfied in a case in which a degree of reliability of the detected object is less than or equal to a predetermined threshold value T3. In this case, the first detection section 41 calculates the degree of reliability of the detected object. As described above, the first detection section 41 can detect the object using the learned model for first detection which uses CNN or the like. Then, by using a so-called softmax function in the output layer of the learned model for first detection, the degree of reliability of the detected object is calculated. The degree of reliability is expressed, for example, as a numerical value from 0 to 1, and the larger the value, the higher the degree of reliability. Therefore, for example, in a case in which the threshold value T3 is set to 0.5 and the degree of reliability of the detected object is less than or equal to 0.5, it is determined that the sixth switching condition is satisfied as there is a high possibility that the object has been erroneously detected.

Further, the determination section 45 may determine that a seventh switching condition is satisfied in a case in which a speed of at least one of the detected hand H or the object M is greater than or equal to a predetermined threshold value T4. Specifically, for example, in a case in which at least one of a speed of the center position of the bounding box BR of the right hand RH, a speed of the center position of the bounding box BL of the left hand LH or a speed of the center position of the bounding box BM of the object M is greater than or equal to the predetermined threshold value T4, it is determined that the seventh switching condition is satisfied. The threshold value T4 is set in advance to a value (for example, 1 m/s) at which it can be determined that there is a high possibility of erroneous detection in a case in which the above-described speed is greater than or equal to the threshold value T4, based on, for example, experimental results.

Further, the determination section 45 may determine that an eighth switching condition is satisfied in a case in which a position of the detected hand H is out of the range of the predetermined work space S.

For example, assume that the coordinates of the center position of the bounding box BR of the right hand RH are (xr, yr), the coordinates of the center position of the bounding box BL of the left hand LH are (xl, yl), and the coordinates of two corners on one diagonal line of the two diagonal lines of the work space S are (x1, y1) and (x2, y2). Note that x1<x2 and y1>y2. In this case, in a case in which the following Formulas (2) and (3) are satisfied, it can be determined that the center position of the bounding box BR of the right hand RH and the center position of the bounding box BL of the left hand LH are present within the range of the work space S.

$$\text{Formula (2): } x1 \leq xr,\ xl \leq x2$$

$$\text{Formula (3): } y1 \leq yr,\ yl \leq y2$$

Therefore, in a case in which at least one of the above Formula (2) or the above Formula (3) is not satisfied, it is determined that the right hand RH and the left hand LH are present outside the range of the work space S, and the eighth switching condition is satisfied.

Note that the first to eighth switching conditions may be appropriately combined to determine that the switching conditions are satisfied in a case in which two or more switching conditions are satisfied. That is, it may be determined that the switching conditions are satisfied in a case in which at least one switching condition among plural switching conditions is satisfied.

In a case in which the switching conditions are not satisfied, the output section 46 outputs the recognition result of the work by the first recognition section 43, and in a case in which the switching conditions are satisfied, the output section 46 outputs the recognition result of the work by the second recognition section 44. For example, the recognition result is displayed by being output to the display 23, or is stored by being output to the storage section 25.

In this manner, the first recognition processing by the first recognition section 43 and the second recognition processing by the second recognition section 44 are switched depending on whether or not the switching conditions are satisfied. For example, as shown in "Recognition Results in a Case of Switching" in Fig. 6, for the second cycle of the work S1 indicated by the solid thick frame, since there is a high possibility of erroneous recognition in the first recognition processing, the work is recognized by the second recognition processing. For other work, the work is recognized by the first recognition processing. Thereby, it is possible to suppress a decrease in the recognition accuracy of the work compared to the case in which the work is recognized by only the first recognition processing or by only the second recognition processing.

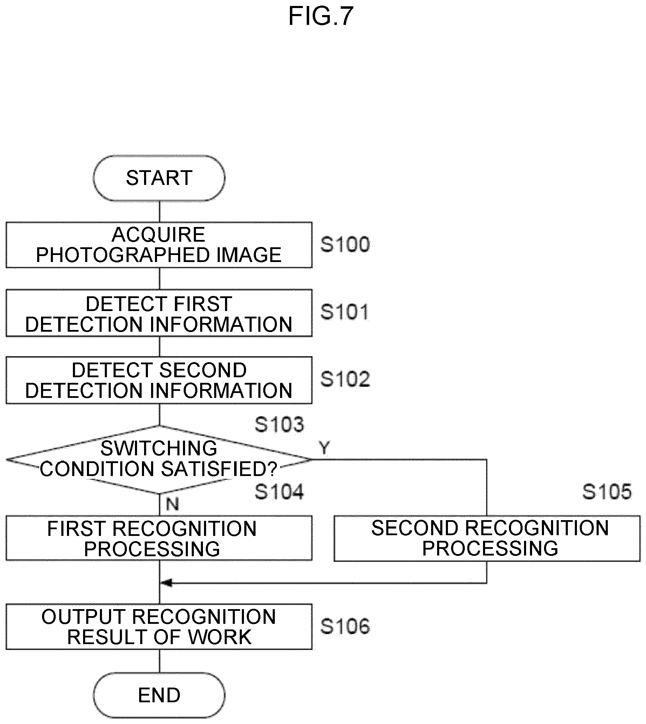

Next, the work recognition processing executed by the CPU 21A of the work recognition device 20 is described with reference to the flowchart illustrated in Fig. 7.

At step S100, the CPU 21A acquires a photographed image, which captures the work of the worker W, from the camera 30.

At step S101, the CPU 21A detects the first detection information relating to the work object M and at least one of the right hand or the left hand of the worker W, based on the photographed image acquired at step S 100. That is, the photographed image is input to the learned model for first detection, and the first detection information is acquired.

At step S102, the CPU 21A detects the second detection information relating to the skeleton of the worker W, based on the photographed image acquired at step S100. That is, the photographed image is input to the learned model for second detection, and the second detection information is acquired.

At step S103, the CPU 21A determines whether or not a switching condition for switching between whether to recognize the work by the first recognition processing or whether to recognize the work by the second recognition processing is satisfied, based on the first detection information acquired at step S101. Specifically, it is determined whether or not at least one of the above-described first to eighth switching conditions is satisfied. Then, in a case in which the determination at step S103 is negative, the processing transitions to step S104, and in a case in which the determination at step S103 is affirmative, the processing transitions to step S105.

At step S104, the CPU 21A executes the first recognition processing based on the first detection information acquired at step S101 and the second detection information acquired at step S102. That is, the first detection information and the second detection information are input to the learned model for first recognition, and the recognition result of the work is acquired.

At step S105, the CPU 21A executes the second recognition processing based on the second detection information acquired at step S102. That is, the second detection information is input to the learned model for second recognition, and the recognition result of the work is acquired.

At step S106, the CPU 21A outputs the work recognition result acquired at step S104 or step S105 to, for example, the display 23 or the storage section 25.

In this manner, in the present exemplary embodiments, it is determined whether to execute the first recognition processing or whether to execute the second recognition processing based on the first detection information, and in a case in which there is a high possibility of erroneous detection, a switch is made from the first recognition processing to the second recognition processing. Thereby, the recognition accuracy of work can be improved.

Note that the above-described exemplary embodiments are merely illustrative examples of the configuration of the present disclosure. The present disclosure is not limited to the above-described specific embodiments, and various modifications can be made within the scope of the technical idea thereof.

Further, the work recognition processing executed by the CPU reading and executing software (a program) in each of above-described exemplary embodiments may be executed by various types of processor other than a CPU. Examples of such processors include a Programmable Logic Device (PLD) in which the circuit configuration can be modified post-manufacture, such as a Field-Programmable Gate Array (FPGA), or a specialized electric circuit that is a processor with a specifically-designed circuit configuration for executing recognition processing, such as an Application Specific Integrated Circuit (ASIC). Further, the work recognition processing may be executed by one of these various types of processors, or may be executed by combining two or more of the same type or different types of processors (for example, plural FPGAs, or a combination of a CPU and an FPGA, or the like). Moreover, a hardware configuration of the various processors is specifically formed as an electric circuit combining circuit elements such as semiconductor elements.

Note that the disclosure of Japanese Patent Application No. 2021-188165 is incorporated herein by reference in its entirety. In addition, all documents, patent applications, and technical standards mentioned herein are incorporated by reference to the same extent as if each individual document, patent application, and technical standard was specifically and individually indicated to be incorporated by reference.

**Claims**

1.   work recognition device, comprising:

an acquisition section that acquires a photographed image capturing work of a worker;
a first detection section that detects, based on the photographed image, first detection information relating to at least one of an object of the work or a hand of the worker, the hand being at least one of a right hand or a left hand of the worker;

a second detection section that detects, based on the photographed image, second detection information relating to a skeleton of the worker;

a first recognition section that executes first recognition processing that recognizes the work, based on the first detection information and the second detection information which have been detected;

a second recognition section that executes second recognition processing that recognizes the work, based on the second detection information that has been detected;

a determination section that determines, based on the first detection information, whether or not a switching condition for switching between recognizing the work by the first recognition section or recognizing the work by the second recognition section is satisfied; and

an output section that, in a case in which the switching condition is not satisfied, outputs a recognition result of the work by the first recognition section, and in a case in which the switching condition is satisfied, outputs a recognition result of the work by the second recognition section.

2. The work recognition device according to claim 1, wherein:
   the determination section determines that the switching condition is satisfied in a case in which a distance between the hand and the object is greater than or equal to a predetermined threshold value.

3. The work recognition device according to claim 1, wherein:
   the determination section determines that the switching condition is satisfied in a case in which a distance between the right hand and the left hand is greater than or equal to a predetermined threshold value.

4. The work recognition device according to claim 1, wherein:
   the determination section determines that the switching condition is satisfied in a case in which a bounding box of the hand and a bounding box of the object do not overlap.

5. The work recognition device according to any one of claim 1 to claim 3, wherein:
   the determination section determines whether or not the switching condition is satisfied based on a size of the object that has been detected.

6. The work recognition device according to claim 5, wherein:
   the determination section determines that the switching condition is satisfied in a case in which a size of a bounding box of the object that has been detected is smaller than a predetermined minimum size of the object.

7. The work recognition device according to claim 5, wherein:
   the determination section determines that the switching condition is satisfied in a case in which a size of a bounding box of the object that has been detected is larger than a predetermined maximum size of the object.

8. The work recognition device according to claim 1, wherein:

   the first detection section calculates a degree of reliability of the object that has been detected; and
   the determination section determines that the switching condition is satisfied in a case in which the degree of reliability of the object is less than or equal to a predetermined threshold value.

9. The work recognition device according to claim 1, wherein:
   the determination section determines that the switching condition is satisfied in a case in which a speed of at least one of the hand or the object, which have been detected, is greater than or equal to a predetermined threshold value.

10. The work recognition device according to claim 1, wherein:
    the determination section determines that the switching condition is satisfied in a case in which a position of the hand that has been detected is outside a range of a predetermined work space.

11. A work recognition method in which a computer executes processing, the processing comprising:

    acquiring a photographed image capturing work of a worker;
    detecting, based on the photographed image, first detection information relating to at least one of an object of the work or a hand of the worker, the hand being at least one of a right hand or a left hand of the worker;
    detecting, based on the photographed image, second detection information relating to a skeleton of the worker;
    executing first recognition processing that recognizes the work, based on the first detection information and the second detection information which have been detected;

executing second recognition processing that recognizes the work, based on the second detection information that has been detected;

determining, based on the first detection information, whether or not a switching condition for switching between recognizing the work by the first recognition processing or recognizing the work by the second recognition processing is satisfied; and

in a case in which the switching condition is not satisfied, outputting a recognition result of the work by the first recognition processing, and in a case in which the switching condition is satisfied, outputting a recognition result of the work by the second recognition processing.

12. A work recognition program that causes a computer to execute processing, the processing comprising:

acquiring a photographed image capturing work of a worker;

detecting, based on the photographed image, first detection information relating to at least one of an object of the work or a hand of the worker, the hand being at least one of a right hand or a left hand of the worker;

detecting, based on the photographed image, second detection information relating to a skeleton of the worker;

executing first recognition processing that recognizes the work, based on the first detection information and the second detection information which have been detected;

executing second recognition processing that recognizes the work, based on the second detection information that has been detected;

determining, based on the first detection information, whether or not a switching condition for switching between recognizing the work by the first recognition processing or recognizing the work by the second recognition processing is satisfied; and

in a case in which the switching condition is not satisfied, outputting a recognition result of the work by the first recognition processing, and in a case in which the switching condition is satisfied, outputting a recognition result of the work by the second recognition processing.

# FIG.1

# FIG.2

# FIG.3

21A

ACQUISITION SECTION — 40

FIRST DETECTION SECTION — 41

SECTION DETECTION SECTION — 42

FIRST RECOGNITION SECTION — 43

SECOND RECOGNITION SECTION — 44

DETERMINATION SECTION — 45

OUTPUT SECTION — 46

# FIG.4

# FIG.5

# FIG.6

CORRECT RECOGNITION RESULTS

RECOGNITION RESULTS OF FIRST RECOGNITION PROCESSING

RECOGNITION RESULTS OF SECOND RECOGNITION PROCESSING

RECOGNITION RESULTS IN A CASE OF SWITCHING

TIME

EP 4 435 719 A1

# FIG.7

```
          ┌──────────────┐
          │    START     │
          └──────┬───────┘
                 │
    ┌────────────────────────┐
    │       ACQUIRE          │  S100
    │  PHOTOGRAPHED IMAGE    │
    └────────────┬───────────┘
                 │
    ┌────────────────────────┐
    │    DETECT FIRST        │  S101
    │ DETECTION INFORMATION  │
    └────────────┬───────────┘
                 │
    ┌────────────────────────┐
    │    DETECT SECOND       │  S102
    │ DETECTION INFORMATION  │
    └────────────┬───────────┘
                 │         S103
              ╱─────────╲
            ╱  SWITCHING  ╲        Y
          ╱ CONDITION SATISFIED? ╲────────┐
            ╲             ╱
              ╲─────────╱
                 │ N  S104                S105
    ┌────────────────────────┐   ┌────────────────────────┐
    │  FIRST RECOGNITION     │   │  SECOND RECOGNITION    │
    │     PROCESSING         │   │     PROCESSING         │
    └────────────┬───────────┘   └────────────┬───────────┘
                 │◄─────────────────────────────┘
    ┌────────────────────────┐
    │  OUTPUT RECOGNITION    │  S106
    │    RESULT OF WORK      │
    └────────────┬───────────┘
                 │
          ┌──────────────┐
          │     END      │
          └──────────────┘
```

# INTERNATIONAL SEARCH REPORT

| International application No. |
| --- |
| **PCT/JP2022/042142** |

| A. | CLASSIFICATION OF SUBJECT MATTER |
| --- | --- |

*G06T 7/20*(2017.01)i
FI:   G06T7/20 300Z

According to International Patent Classification (IPC) or to both national classification and IPC

| B. | FIELDS SEARCHED |
| --- | --- |

Minimum documentation searched (classification system followed by classification symbols)

G06T7/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2010-36762 A (DENSO CORP) 18 February 2010 (2010-02-18)<br>      paragraphs [0070]-[0093], [0102]-[0106], [0128], fig. 9 | 1-2, 4-8, 11-12 |
| A | | 3, 9-10 |
| Y | JP 2020-188860 A (OMRON TATEISI ELECTRONICS CO) 26 November 2020<br>(2020-11-26)<br>      paragraph [0028] | 1-2, 4-8, 11-12 |
| A | | 3, 9-10 |
| Y | JP 2021-56968 A (AISIN SEIKI) 08 April 2021 (2021-04-08)<br>      paragraph [0033] | 1-2, 4-8, 11-12 |
| A | | 3, 9-10 |
| Y | JP 2021-56717 A (AISIN SEIKI) 08 April 2021 (2021-04-08)<br>      paragraphs [0030], [0047], [0050] | 4 |
| A | | 3, 9-10 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 435 719 A1

<table>
<tr><th colspan="4" align="left">INTERNATIONAL SEARCH REPORT</th><th colspan="2">International application No.<br>**PCT/JP2022/042142**</th></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | US 2020/0311973 A1 (ADOBE INC.) 01 October 2020 (2020-10-01)<br>    paragraph [0033] | 4 |
| A | | 3, 9-10 |
| Y | WO 2020/121973 A1 (KOITO MFG CO LTD) 18 June 2020 (2020-06-18)<br>    paragraphs [0193]-[0194], [0214], [0216], [0221], fig. 33 | 5-7 |
| A | | 3, 9-10 |
| Y | JP 2021-33510 A (ISUZU MOTORS LTD) 01 March 2021 (2021-03-01)<br>    paragraphs [0027], [0042]-[0043] | 8 |

Form PCT/ISA/210 (second sheet) (January 2015)

19

**INTERNATIONAL SEARCH REPORT**
**Information on patent family members**

International application No.

**PCT/JP2022/042142**

| Patent document cited in search report | | | Publication date (day/month/year) | Patent family member(s) | Publication date (day/month/year) |
|---|---|---|---|---|---|
| JP | 2010-36762 | A | 18 February 2010 | (Family: none) | |
| JP | 2020-188860 | A | 26 November 2020 | (Family: none) | |
| JP | 2021-56968 | A | 08 April 2021 | (Family: none) | |
| JP | 2021-56717 | A | 08 April 2021 | (Family: none) | |
| US | 2020/0311973 | A1 | 01 October 2020 | (Family: none) | |
| WO | 2020/121973 | A1 | 18 June 2020 | US 2021/0295065 A1 paragraphs [0229]-[0230], [0244], [0252]-[0254], [0259], fig. 33 EP 3896645 A1 CN 113243016 A | |
| JP | 2021-33510 | A | 01 March 2021 | (Family: none) | |

Form PCT/ISA/210 (patent family annex) (January 2015)

# EP 4 435 719 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019012328 A
- JP 6444573 B
- JP 2021188165 A

**Non-patent literature cited in the description**

- **SHAOQING REN ; KAIMING HE ; ROSS GIRSHICK ; JIAN SUN.** *Faster R-CNN: Towards Real-Time Object Detection with Region Proposal Networks*
- Understanding Human Hands in Contact at Internet Scale. **DANDAN SHAN1 ; JIAQI GENG ; MICHELLE SHU ; DAVID F. FOUHEY.** CVPR2020. University of Michigan, Johns Hopkins University, 9869-9878
- **ZHE CAO ; GINES HIDALGO ; TOMAS SIMON ; SHIH-EN WEI ; YASER SHEIKH.** OpenPose: Real-time Multi-Person 2D Pose Estimation using Part Affinity Fields. *IEEE TRANSACTIONS ON PATTERN ANALYSIS AND MACHINE INTELLIGENCE*